# EUROPEAN PATENT SPECIFICATION

(11) **EP 3 950 235 B1**
(45) Date of publication and mention of the grant of the patent: **22.11.2023**
(21) Application number: 21199359.7
(22) Date of filing: 25.08.2018
(51) Int. Cl.: B25J 11/00, G05D 1/02, G01C 21/32, G01C 21/00

(54) **SELF-PROPELLED ROBOT PATH PLANNING METHOD, SELF-PROPELLED ROBOT AND STORAGE MEDIUM**
SELBSTFAHRENDE ROBOTER PFADPLANUNGSMETHODE, SELBSTFAHRENDE ROBOTER UND SPEICHERMEDIUM
PROCÉDÉ DE PLANIFICATION DE TRAJECTOIRE DE ROBOT AUTOMOTRICE, ROBOT AUTOMOTRICE ET SUPPORT DE STOCKAGE

(30) Priority: 25.08.2017 CN 201710743056
(43) Date of publication of application: 09.02.2022
(62) Divisional of application: 18847907.5
(73) Proprietor: Ecovacs Robotics Co., Ltd., Wuzhong District Suzhou, Jiangsu 215168 (CN)
(72) Inventor: TANG, Jinju, Suzhou, 215168 (CN)
(74) Representative: Renaudo, Adrien Hanouar

(56) References cited:
- US-A1- 2005 131 581
- US-A1- 2011 010 033
- US-A1- 2013 231 779
- US-A1- 2013 325 244
- US-A1- 2016 144 505
- US-B1- 9 594 377

## Description

### FIELD

The embodiments discussed herein are related to a self-propelled robot path planning method, self-propelled robot and storage medium.

### BACKGROUND

To provide an efficient walk of a self-propelled robot in its operation space, an environmental map with spatial information contained therein may be created, for example, to aid the self-propelled robot in making a judgment as to whether it can make a certain motion or perform a certain task in addition to path planning. However, existing two-dimensional maps fail to properly offer guidance to a robot, for example, due to the self-propelled robot having a relatively different height. Additionally, data quantity resulting from usage of three-dimensional maps may result in large amounts of computational overhead, as a result of which the time for data processing and operation may be prolonged. Accordingly, in some conventional systems and methods, self-propelled robots may have a comparatively low working efficiency, poor capability of environment awareness, and/or irrational walking paths.

Rather, this background is only provided to illustrate one example technology area where some embodiments described herein may be practiced. Prior art US 2013/326244 A1 generally discloses time-dependent navigation of telepresence robots, and specifically discloses that the telepresence robot may include a drive system, a control system, an imaging system, and a mapping module; the mapping module may access a plan view map of an area and tags associated with the area; in various embodiments, each tag may include tag coordinates and tag information, which may include a tag annotation; a tag identification system may identify tags within a predetermined range of the current position and the control system may execute an action based on an identified tag whose tag information comprises a telepresence robot action modifier; the telepresence robot may rotate an upper portion independent from a lower portion; and a remote terminal may allow an operator to control the telepresence robot using any combination of control methods, including by selecting a destination in a live video feed, by selecting a destination on a plan view map, or by using a joystick or other peripheral device (see ABSTRACT of US 2013/326244 A1).

### SUMMARY

A self-propelled robot path planning method may include acquiring, by a self-propelled robot walking in a to-be-operated space, information of obstacles at different heights. The method may also include generating a multilayer environmental map of the to-be-operated space. Additionally, the method may include synthetically processing information in the multilayer environmental map to obtain synthetically processed data. The method may include planning a walking path for the self-propelled robot according to the synthetically processed data.

### BRIEF DESCRIPTION OF THE DRAWINGS

Example embodiments will be described and explained with additional specificity and detail through the use of the accompanying drawings in which:
FIG. 1 illustrates a flow chart in accordance with an example embodiment;
FIG. 2a illustrates a flow chart in accordance with another example embodiment;
FIG. 2b illustrates another flow chart in accordance with the example embodiment of FIG. 2a;
FIG. 3 illustrates a structural diagram of a device for planning a path for a self-propelled robot in accordance with yet another example embodiment; and
FIG. 4 illustrates a schematic structural block diagram of a self-propelled robot in accordance with an example embodiment.

### DESCRIPTION OF EXAMPLE EMBODIMENTS

The invention is set forth in the independent claims 1 and 15 and in the dependent claims 2 to 14.

According to aspects of the present disclosure, a self-propelled robot path planning method, a self-propelled robot and a storage medium is discussed herein, for example, so that a walking path for the self-propelled robot can be planned according to synthetically processed data that may be obtained by acquiring the information of obstacles at different heights and generating a multilayer environmental map of the to-be-operated space(s). The self-propelled robot path planning method, the self-propelled robot and the storage medium of the present disclosure may reduce computational overhead of conventional systems and methods, increase computing speed and improve path planning with more working efficiency.

A self-propelled robot path planning method may include the following blocks (e.g., steps). Although described as discrete blocks, various blocks may be divided into additional blocks, combined into fewer blocks, or eliminated, depending on the desired implementation. At block 100, information may be acquired by a self-propelled robot walking in a to-be-operated space, in which the information of obstacles may be at different heights. Additionally or alternatively, at block 100, a multilayer environmental map of the to-be-operated space may be generated. At block 200, the method may include synthetically processing information in the multilayer environmental map to obtain synthetically processed data. At block 300, the method may include planning a walking path for the self-propelled robot according to the synthetically processed data.

In some embodiments, the multilayer environmental map in block 100 may contain a plurality of two-dimensional maps, with two-dimensional maps corresponding to the information of obstacles at different heights. The synthetic processing in block 200 may include: uniting the information of obstacles in two-dimensional maps to obtain the information of one or more of the obstacles of the to-be-operated space. Additionally or alternatively, the synthetic processing in block 200 may include intersecting walkable regions in two-dimensional maps to obtain walkable regions.

Additionally or alternatively, the synthetic processing in block 200 may include: uniting the information of obstacles in two-dimensional maps to obtain the information of one or more of the obstacles of the to-be-operated space; and intersecting walkable regions in two-dimensional maps to obtain the information of walkable regions in the to-be-operated space. The walkable regions may include one or more of the regions in the to-be-operated space that have a distance from obstacles not less than a particular value. The particular value may be about 10-30 centimeters, for example, about 20 centimeters.

In some embodiments, the multilayer map may also be a two-dimensional map that corresponds to synthetic distribution information of the obstacles at different heights. For ease of identification, the information of obstacles at different plane heights may be labeled in different ways.

In these or other embodiments, and in view of potential problems posed in view of manual intervention of path planning, obtaining the synthetically processed data in block 200 may further comprise the following blocks (e.g., steps). Although described as discrete blocks, various blocks may be divided into additional blocks, combined into fewer blocks, or eliminated, depending on the desired implementation. At block 210, it may be determined whether addition of a new walking path is recommended (e.g., suggested, required, etc.); if so, the method may include correspondingly updating the multilayer environmental map and then proceeding with block 300; otherwise, the method may proceed to block 300.

Furthermore, in block 100, there may be numerous ways in which the self-propelled robot walks in the to-be-operated space. In these or other embodiments, the self-propelled robot may walk in such a way that the self-propelled robot scans and detects peripheral regions on site, and walks towards a next undetected region until one or more of the regions in the to-be-operated space may be detected.

Additionally or alternatively, the self-propelled robot may walk in such a way that the self-propelled robot enters (e.g., directly) in the middle position of the to-be-operated space, scans and detects peripheral regions at the middle position, and walks towards a next undetected region until one or more of the regions in the to-be-operated space may be detected. Additionally or alternatively, the self-propelled robot may walk in a way of traversal walking.

In some embodiments, planning a walking path for the self-propelled robot in block 300 may include selecting, in one of the walkable regions, a starting point and an endpoint for the self-propelled robot, the shortest path between the starting point and the endpoint being the walking path.

A self-propelled robot may include a sensor assembly, a processor and a memory. The sensor assembly may be coupled with the processor and configured to acquire information of obstacles at different heights when the self-propelled robot walks in a to-be-operated space. The memory may be configured to store a program.

The processor may be coupled with the memory and configured to execute the program stored in the memory to: generate a multilayer environmental map of the to-be-operated space according to the acquired information of obstacles at different heights; synthetically process information in the multilayer environmental map to obtain synthetically processed data; and plan a walking path for the self-propelled robot according to the synthetically processed data.

A computer-readable storage medium that stores a computer program may be included, wherein the computer program may be executed by a computer to: generate a multilayer environmental map of a to-be-operated space according to information of obstacles at different heights acquired by a self-propelled robot when walking in the to-be-operated space; synthetically process information in the multilayer environmental map to obtain synthetically processed data; and plan a walking path for the self-propelled robot according to the synthetically processed data.

Thus, according to one or more aspects of the present disclosure, one or more embodiments provided herein may include a self-propelled robot path planning method that can plan a walking path for the self-propelled robot according to synthetically processed data obtained by acquiring the information of obstacles at different heights and generating a multilayer environmental map of the to-be-operated space.

In any one of embodiments, the information of one or more of the obstacles of the to-be-operated space at least comprises: the information of one of the obstacles of the to-be-operated space, the information of some of the obstacles of the to-be-operated space and the information of all the obstacles of the to-be-operated space.

Embodiments of the present disclosure will be explained with reference to the accompanying drawings.

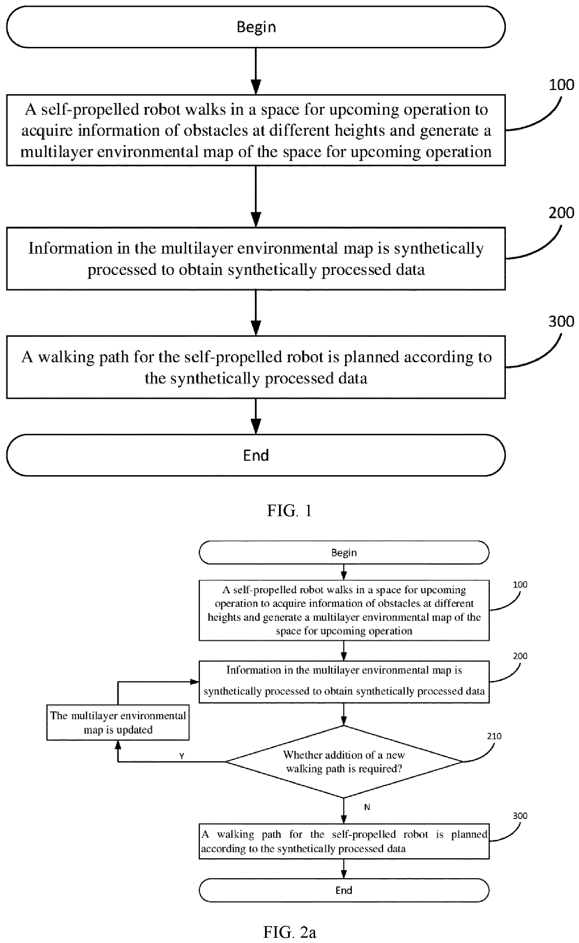

FIG. 1 is a flow chart of a self-propelled robot path planning method of the present disclosure. As illustrated in FIG. 1, the present disclosure provides a self-propelled robot path planning method comprising the following blocks (e.g., steps). Although described as discrete blocks, various blocks may be divided into additional blocks, combined into fewer blocks, or eliminated, depending on the desired implementation. At block 100, a self-propelled robot may walk in a to-be-operated space to acquire information of obstacles at different heights and generate a multilayer environmental map of the to-be-operated space. At block 200, information in the multilayer environmental map may be synthetically processed to obtain synthetically processed data. At block 300, a walking path for the self-propelled robot may be planned according to the synthetically processed data.

In some embodiments, the multilayer environmental map in block 100 may include a plurality of two-dimensional maps, with the two-dimensional maps corresponding to the information of obstacles at different heights. The plurality of two-dimensional maps described above may be implemented through detection by sensor assemblies arranged on the body of the self-propelled robot at different heights. Examples of sensor assemblies may include a laser ranging sensor assembly, an infrared sensor assembly, an ultrasonic sensor assembly, and the like. Within a particular height range, the sensor assemblies arranged at different heights may divide the to-be-operated space into a plurality of detection layers, and may generate the multilayer environmental map by recording the information of obstacles detected at each respective detection layer. In some embodiments, the height range over which the to-be-operated space can be detected may be dictated by the working ranges of the various sensor assemblies.

The synthetic processing in block 200 may include uniting the information of obstacles in two-dimensional maps to obtain the information of one or more of the obstacles of the to-be-operated space. For example, as long as there is an obstacle at a certain location on at least one layer of a multilayer environmental map, it may be determined that the self-propelled robot may not make a certain motion (e.g., pass over this location). This location may be a region in which the self-propelled robot may not walk (e.g., due to difficulty, physical constraints, safety, etc.). In some embodiments, another part of the to-be-operated space different than the above non-walkable region may be the walkable region. Path planning for the self-propelled robot may be conducted within the range of this walkable region.

Furthermore, in block 100, the self-propelled robot may walk in the to-be-operated space in numerous ways. In these or other embodiments, the self-propelled robot may scan and detect peripheral regions on site, and may walk towards a next undetected region until one or more of the regions in the to-be-operated space may be detected. As referred to in the present disclosure, the term "on site" may refer to a location of the self-propelled robot on startup. In some embodiments, the self-propelled robot may walk in the to-be-operated space to acquire the information of obstacles at different heights, which may be achieved through the following blocks (e.g., steps). Although described as discrete blocks, various blocks may be divided into additional blocks, combined into fewer blocks, or eliminated, depending on the desired implementation. At block 101, the information of obstacles at different heights around the current location of the robot may be acquired after startup. At block 102, a walking direction away from and/or without obstacles may be determined based on the acquired information of obstacles at different heights.

At block 103, if a walking direction is determined, the robot may walk a preset distance (e.g., about 50 centimeters) in the determined walking direction. Upon completion of walking the preset distance in the predetermined direction, the robot may enter a next detection region.

At block 104, in the next detection region, the information of obstacles at different heights therearound may be acquired. Additionally or alternatively, the information of obstacles at different heights acquired in the next detection region may be compared with the information of obstacles at different heights corresponding to regions where information may be already acquired to determine whether the next detection region may be a detected region. If yes, one or more regions of the to-be-operated space may be detected; otherwise, block 102 may be performed again.

At block 105, if a plurality of walking directions is determined, the robot may walk a preset distance in one of the walking directions. Upon completion of walking the preset distance in the walking direction, the robot may enter a next detection region.

At block 106, in the next detection region, the information of obstacles at different heights therearound may be acquired. Additionally or alternatively, the information of obstacles at different heights acquired in the next detection region may be compared with the information of obstacles at different heights corresponding to regions where information may be already acquired to determine whether the next detection region may be a detected region. If yes, the method may proceed to block 107, and otherwise, return to block 102.

At block 107, it may be determined whether there is a walking direction not taken among the plurality of walking directions determined in the above block 105. If yes, the robot may walk a preset distance in the walking direction not taken to enter a next detection region, and block 106 may be performed again; otherwise, one or more regions of the to-be-operated space may be detected.

In some embodiments, planning a walking path for the self-propelled robot in block 300 may include: selecting, in one of the walkable regions, a starting point and an endpoint for the self-propelled robot, the shortest path between the starting point and the endpoint being the walking path. When the self-propelled robot moves or is directed to move from its current location to the starting point to begin operation after the completion of the path planning, a preferred walking route may be planned based on the created multilayer environmental map and the robot may walk following the planned walking route.

Thus, according to in present embodiment and/or other embodiments of the present disclosure, the self-propelled robot may acquire the two-dimensional multilayer environmental map using onsite detection. Additionally or alternatively, the self-propelled robot may select, from the multilayer environmental map, a union set of the information of obstacles to obtain a walkable region, and may conduct path planning in this walkable region.

The self-propelled robot path planning method provided in this embodiment and/or others of the present disclosure may include the following blocks (e.g., steps). Although described as discrete blocks, various blocks may be divided into additional blocks, combined into fewer blocks, or eliminated, depending on the desired implementation. At block 100, a self-propelled robot may walk in a to-be-operated space to acquire information of obstacles at different heights and generate a multilayer environmental map of the to-be-operated space. At block 200, information in the multilayer environmental map may be synthetically processed to obtain synthetically processed data. At block 300, a walking path for the self-propelled robot may be planned according to the synthetically processed data.

In some embodiments, the multilayer environmental map in block 100 may include a plurality of two-dimensional maps, with two-dimensional maps corresponding to the information of obstacles at different heights. The synthetic processing in block 200 may include intersecting (e.g., overlapping) walkable regions in two-dimensional maps to obtain walkable regions. For example, as long as a certain location on one or more layers in the multilayer environmental map may be determined to be the walkable region, these locations may include the walkable regions.

The walkable regions may include one or more of the regions in the to-be-operated space that have a distance from obstacles not less (e.g., greater) than a particular value. For example, the particular value may range from about 10 to 30 centimeters, e.g., about 20 centimeters. During actual work (e.g., walking/movement of the robot), the obstacle regions and the walkable regions may be taken into consideration, and the regions in the walkable region that may be spaced a certain distance apart from obstacles may be selected as walking paths (e.g., preferred walking paths and/or ranked walking paths). Furthermore, in block 100, the self-propelled robot may walk in the to-be-operated space in such a way that the self-propelled robot may enter (e.g., proceeds directly) to a middle position of the to-be-operated space, scan and detect peripheral regions at the middle position, and walk towards a next undetected region until one or more of the regions in the to-be-operated space may be detected.

In some embodiments, a middle position tag (e.g., a dot, a circle, or text) may be provided in the middle position of the to-be-operated space. The self-propelled robot may capture images of surroundings at its location after startup. If an image containing the middle position tag is captured, a moving direction and a moving distance for the self-propelled robot may be determined by identifying information such as a size and a position of the middle position tag in the image. The self-propelled robot may move the moving distance in the determined moving direction into the middle position of the to-be-operated space. If no image including the middle position tag is captured, the robot may turn a preset angle (e.g., about 15 degrees, about 30 degrees, etc.) to continue capturing until an image containing the middle position tag is captured.

There may be a plurality of walking directions starting from the middle position. After completing detection in one walking direction, the robot may return to the middle position so as to detect information in another walking direction. The detection process may be the same as or similar to the process described in other embodiments of the present disclosure.

In some embodiments, planning a walking path for the self-propelled robot in block 300 may include selecting, in the walkable region, a starting point and an endpoint for the self-propelled robot, the shortest path between the starting point and the endpoint being the walking path.

Thus, in present embodiment and/or other embodiments of the present disclosure, the self-propelled robot may acquire the two-dimensional multilayer environmental map by entering (e.g., directly) into the middle position of the to-be-operated space and initiating detection for peripheral regions from the middle position. The intersection (e.g., overlap or an amount of overlap) of the walkable regions may be selected from the multilayer environmental map and path planning may be conducted on the basis of this intersection.

The self-propelled robot path planning method may include the following blocks (e.g., steps). Although described as discrete blocks, various blocks may be divided into additional blocks, combined into fewer blocks, or eliminated, depending on the desired implementation.

At block 100, a self-propelled robot may walk in a to-be-operated space to acquire information of obstacles at different heights and generate a multilayer environmental map of the to-be-operated space. At block 200, information in the multilayer environmental map may be synthetically processed to obtain synthetically processed data. At block 300, a walking path for the self-propelled robot may be planned according to the synthetically processed data.

The synthetic processing in block 200 may include uniting (e.g., combining, stitching, etc.) the information of obstacles in two-dimensional maps to obtain the information of one or more of the obstacles of the to-be-operated space; and intersecting the walkable regions in two-dimensional maps to obtain the information of the walkable regions of the to-be-operated space.

The walkable regions may include one or more of the regions in the to-be-operated space that have a distance from obstacles not less than a particular value. In some embodiments, a threshold distance from obstacles may range from about 10 to about 30 centimeters, for example, about 20 centimeters.

Additionally or alternatively, the multilayer map in these or other embodiments may be two-dimensional. However, synthetic distribution information corresponding to the obstacles at different heights may be present on the two-dimensional map. For ease of identification, the obstacles and/or any associated information thereof at different plane heights may be labeled in different ways. For example, the obstacles and/or any associated information thereof at different heights may be distinguished from one another using patterns, colors, numbers, and other suitable identifiers.

Additionally or alternatively, in block 100, the self-propelled robot may walk in the to-be-operated space in a way of traversal walking, e.g. straight-line reciprocating walk, m-shaped walk or zigzag walk to detect one or more of the regions in the to-be-operated space.

In some embodiments, planning a walking path for the self-propelled robot in S300 may include selecting, in the walkable region, a starting point and an endpoint for the self-propelled robot, the shortest path between the starting point and the endpoint being the walking path.

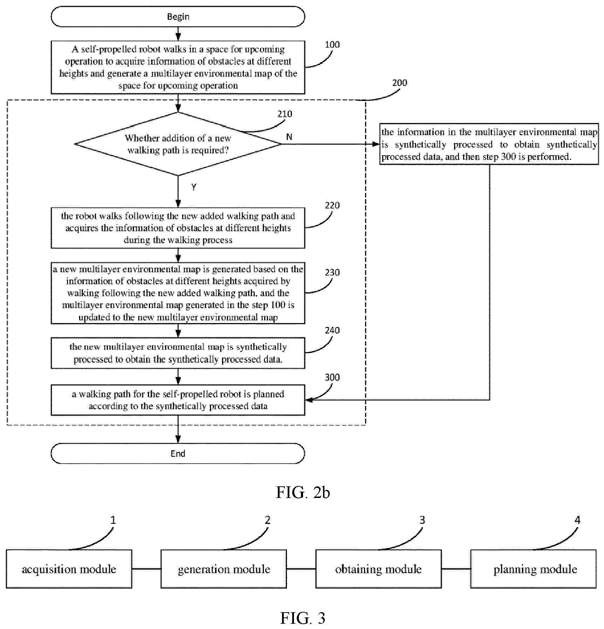

Thus in present embodiment and/or other embodiments of the present disclosure, by walking in the region for upcoming operation in a traversal manner, the self-propelled robot may detect the two-dimensional map having the synthetic distribution information corresponding to the obstacles at different heights, and may select, from the two-dimensional map, a union set of the information of obstacles and the intersection of the walkable regions at the same time (or about the same time). And based on the integration of the above two elements, path planning may be conducted. FIG. 2a and FIG. 2b are flow charts in accordance with present embodiment of the present disclosure. As illustrated in FIG. 2a, this embodiment provides a self-propelled robot path planning method comprising the following blocks (e.g., steps). Although described as discrete blocks, various blocks may be divided into additional blocks, combined into fewer blocks, or eliminated, depending on the desired implementation. At block 100, a self-propelled robot may walk in a to-be-operated space to acquire information of obstacles at different heights and generate a multilayer environmental map of the to-be-operated space. At block 200, information in the multilayer environmental map may be synthetically processed to obtain synthetically processed data.

In these or other embodiments, and in view of potential problems posed in view of manual intervention of path planning, block 200 may be implemented through the following blocks (e.g., steps). Although described as discrete blocks, various blocks may be divided into additional blocks, combined into fewer blocks, or eliminated, depending on the desired implementation. At block 210, it may be determined whether to add a new walking path. If so, a next block 220 may be performed; otherwise, the information in the multilayer environmental map may be synthetically processed to obtain synthetically processed data, and block 300 may be performed. At block 220, the robot may walk following a newly added walking path and may acquire the information of obstacles at different heights during the walking process.

At block 230, the multilayer environmental map generated in block 100 may be updated based on the information of obstacles at different heights acquired by walking following the newly added walking path. At block 240, the updated multilayer environmental map may be synthetically processed to obtain the synthetically processed data before proceeding to block 300. At block 300, a walking path for the self-propelled robot may be planned according to the synthetically processed data.

In other embodiments, as illustrated in FIG. 2b, and in view of potential problems posed in view of manual intervention of path planning, block 200 may also be implemented through the following blocks (e.g., steps). Although described as discrete blocks, various blocks may be divided into additional blocks, combined into fewer blocks, or eliminated, depending on the desired implementation.

At block 210', it may be determined whether to add a new walking path. If so, a next block 220'may be performed; otherwise, the information in the multilayer environmental map may be synthetically processed to obtain synthetically processed data, and block 300 may be performed.

At block 220', the robot may walk following a newly added walking path and may acquire the information of obstacles at different heights during the walking process. At block 230', a new multilayer environmental map may be generated based on the information of obstacles at different heights acquired by walking following the newly added walking path, and the multilayer environmental map generated in block 100 may be updated to the new multilayer environmental map. At block 240' the new multilayer environmental map may be synthetically processed to obtain the synthetically processed data before proceeding to the above block 300.

As described above, determining whether to add a new walking path may be performed after the self-propelled robot receives a path manually input by a user, wherein the user may input a path by means of an input device (e.g., a touch screen, or an input control key) on the self-propelled robot, or by voice using a voice acquisition and identification device on the self-propelled robot, etc.

In these or other embodiments, the multilayer environmental map in block 100 may include a plurality of two-dimensional maps, with two-dimensional maps corresponding to the information of obstacles at different heights. Furthermore, the way of walking of the self-propelled robot in the to-be-operated space in block 100, the way of synthetic processing in block 200, or the way of planning a walking path for the self-propelled robot in block 300 may be any of those used in above embodiments described above.

Thus in present embodiment and/or other embodiments of the present disclosure, the self-propelled robot may acquire the two-dimensional multilayer environmental map by means of onsite detection. Additionally or alternatively, the self-propelled robot may select, from the multilayer environmental map, a union set of the information of obstacles to obtain the walkable region, and may conduct path planning in this walkable region. In these or other embodiments that may be based on automatic mapping and point selection as well as walking path planning, the self-propelled robot may be imparted with the capabilities of human participation and of addition or alteration of new walking paths. Additionally or alternatively, before the final walking path is planned, a judgment (e.g., an input) as to whether manual intervention exists (e.g., has been provided or will be provided) may be added; if the judgment result indicates "Yes", map information may be updated according to the information regarding manual intervention before the final walking path may be planned; and if the judgment result indicates "No", then path planning may be conducted (e.g., directly).

The newly added walking path in the above block 210 may be a path input through a manual operation. For example, the element of manual intervention may be added to avoid the case where the generated multilayer environmental map may not be accurate enough due to missing of some detection paths during the automatic search process of the self-propelled robot. In this manner, accuracy of the multilayer environmental map can be improved. Additionally or alternatively, the self-propelled robot may acquire the information of obstacles by walking and detecting the operation space following the manually added walking path, thereby speeding up the building of the multilayer environmental map.

In these or other embodiments, the present disclosure provides a self-propelled robot path planning method in which the information of obstacles at different heights may be acquired and a multilayer environmental map of the to-be-operated space may be generated, synthetically processed data may be obtained and a walking path for the self-propelled robot may be planned.

FIG. 3 is a schematic diagram illustrating a structure of a device for planning a path for a self-propelled robot provided in the present disclosure, wherein the device may be hardware of an embedded program integrated into the self-propelled robot, application software installed in the self-propelled robot, and/or tools software embedded into the operating system of the self-propelled robot. In some embodiments, as illustrated in FIG. 3, the device may include: an acquisition module 1, a generation module 2, an obtaining module 3, and a planning module 4. The acquisition module 1 may be configured to acquire information of obstacles at different heights when the self-propelled robot walks in a to-be-operated space. The generation module 2 may be configured to generate a multilayer environmental map of the to-be-operated space according to the acquired information of obstacles at different heights. The obtaining module 3 may be configured to synthetically process information in the multilayer environmental map to obtain synthetically processed data. The planning module 4 may be configured to plan a walking path for the self-propelled robot according to the synthetically processed data.

Further, the multilayer environmental map may include a plurality of two-dimensional maps, with two-dimensional maps corresponding to the information of obstacles at different heights. Additionally or alternatively, the obtaining module 3 may also be configured to unite the information of obstacles in one or more of the two-dimensional maps to obtain information of obstacles in the to-be-operated space.

Additionally or alternatively, the obtaining module 3 may be configured to intersect walkable regions in one or more of the two-dimensional maps to obtain walkable regions. Additionally or alternatively, the obtaining module 3 may be configured to unite the information of obstacles in one or more of the two-dimensional maps to obtain information of obstacles in the to-be-operated space, and intersect walkable regions in one or more of the two-dimensional maps to obtain information of walkable regions in the to-be-operated space.

In some embodiments, the walkable regions may include one or more of the regions in the to-be-operated space that have a distance from obstacles not less than a particular value. For example, the particular value may be about 10-30 centimeters. In some embodiments, the multilayer map may be a two-dimensional map that corresponds to synthetic distribution information of obstacles at different heights. Additionally or alternatively, the information of obstacles at different plane heights may be labeled in different ways.

In these or other embodiments, the device also may include a determination module and an updating module. The determination module may be configured to determine whether a new walking path is to be added. The updating module may be configured to: when the determination module determines to add a new walking path, guide the self-propelled robot in walking a new added walking path and acquire information of obstacles at different heights during walking; and update the multilayer environmental map generated by the generation module based on the information of obstacles at different heights acquired by walking the new added walking path, thereby causing the obtaining module to synthetically process the information in the updated multilayer environmental map to obtain synthetically processed data. Correspondingly, the obtaining module may also be configured to synthetically process information in the multilayer environmental map generated by the generation module to obtain synthetically processed data when the determination module determines that a new walking path is not to be added.

In some embodiments, the self-propelled robot may walk in the to-be-operated space in such a way that the self-propelled robot may scan and detect peripheral regions on site, and may walk towards a next undetected region until one or more of the regions in the to-be-operated space may be detected.

Additionally or alternatively, the self-propelled robot may walk in the to-be-operated space in such a way that the self-propelled robot may enter (e.g., directly) into the middle position of the to-be-operated space, scan and detect peripheral regions at the middle position, and walk towards a next undetected region until one or more of the regions in the to-be-operated space may be detected. Additionally or alternatively, the self-propelled robot may walk in the to-be-operated space in a way of traversal walking. In some embodiments, the planning module 4 may be configured to select, in the walkable region, a starting point and an endpoint for the self-propelled robot, a shortest path between the starting point and the endpoint being the walking path.

The device for planning a path for a self-propelled robot in accordance with the one or more embodiments of the present disclosure may implement the technical solutions described in the above method embodiments, and reference may be made to corresponding contents in the above embodiments for example implementations of one or more of the above modules or units, which will not be redundantly described herein. The device embodiments described above are merely illustrative, wherein the modules described as separate members may be or not be physically separated, and the members displayed as modules may be or not be physical units, e.g., may be located in one place, or may be distributed to a plurality of different places. Part or all of the modules may be selected accordingly to implement the objectives of the solutions in the embodiments of the present disclosure.

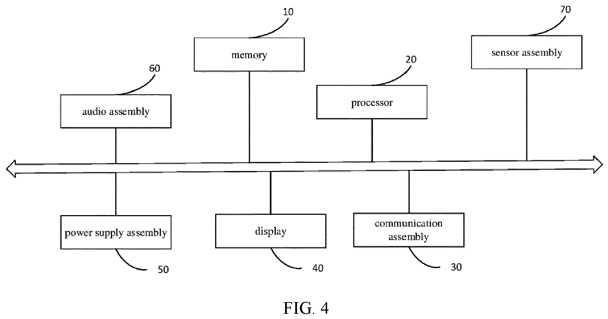

FIG. 4 is a block diagram illustrating a structure of a self-propelled robot provided in the present disclosure. As illustrated in FIG. 4, the self-propelled robot may include a sensor assembly 70, a processor 20 and a memory 10. The sensor assembly 70 may be coupled with the processor 20 and may be configured to acquire information of obstacles at different heights when the self-propelled robot walks in a to-be-operated space. The memory 10 may be configured to store a program. The processor 20 may be coupled with the memory 10 and configured to execute the program stored in the memory 10 to:
generate a multilayer environmental map of the to-be-operated space according to the acquired information of obstacles at different heights;
synthetically process information in the multilayer environmental map to obtain synthetically processed data; and
plan a walking path for the self-propelled robot according to the synthetically processed data.

The memory 10 may be configured to store data of various types to support operations on the self-propelled robot. In some embodiments, the memory 10 may include computer-readable storage media or one or more computer-readable storage mediums for carrying or having computer-executable instructions or data structures stored thereon. Such computer-readable storage media may be any available media that may be accessed by a general-purpose or special-purpose computer, such as the processor 20. By way of example, and not limitation, such computer-readable storage media may include non-transitory computer-readable storage media including static random access memory (SRAM), Random Access Memory (RAM), Read-Only Memory (ROM), Electrically Erasable Programmable Read-Only Memory (EEPROM), a programmable read-only memory (PROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 20 to perform a certain operation or group of operations as described in this disclosure. In these and other embodiments, the term "non-transitory" as explained in the present disclosure should be construed to exclude only those types of transitory media that were found to fall outside the scope of patentable subject matter in the Federal Circuit decision of *In re Nuijten,* 500 F.3d 1346 (Fed. Cir. 2007). Combinations of the above may also be included within the scope of computer-readable media.

The above sensor assembly 70 may include an image pick-up sensor assembly, a laser ranging sensor assembly, an infrared sensor assembly, an ultrasonic sensor assembly, and/or the like. One or more sensor assemblies may include a plurality of sensors and the positions of the plurality of sensors may be different. For example, a laser ranging sensor may be disposed at the top of the self-propelled robot, while an ultrasonic sensor may be disposed at the front end of a walking direction and an infrared sensor may be disposed at the rear end of the walking direction, etc. Other suitable positions and combinations of sensors disposed on/within the self-propelled robot are contemplated. Further, as illustrated in FIG. 4, the self-propelled robot may comprise other assemblies such as a communication assembly 30, a power supply assembly 50, an audio assembly 60, a display 40 and the like. FIG. 4 schematically illustrates example assemblies, which does not mean that the self-propelled robot may include only the assemblies illustrated in FIG. 4.

Correspondingly, an embodiment of the present disclosure also provides a computer-readable storage medium that stores a computer program. The computer program, when executed by a computer, can implement the blocks (e.g., elements, steps, functions, etc.) with respect to the self-propelled robot path planning method of the present disclosure.

In accordance with common practice, the various features illustrated in the drawings may not be drawn to scale. The illustrations presented in the present disclosure are not meant to be actual views of any particular apparatus (e.g., device, system, etc.) or method, but are merely idealized representations that are employed to describe various embodiments of the disclosure. Accordingly, the dimensions of the various features may be arbitrarily expanded or reduced for clarity. In addition, some of the drawings may be simplified for clarity. Thus, the drawings may not depict all of the components of a given apparatus (e.g., device) or all operations of a particular method.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner. Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used in the present disclosure to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

## Claims

1. A self-propelled robot path planning method, comprising:
acquiring (100), by sensor assemblies arranged on a self-propelled robot, information of obstacles at different heights, when the self-propelled robot walking in a to-be-operated space; wherein the sensor assemblies arranged at different heights divide the to-be-operated space into a plurality of detection layers, and record the information of obstacles detected at each respective detection layer; and
planning (300) a walking path for the self-propelled robot according to the information of obstacles at different heights.

2. The method according to claim 1, further comprising:
generating (100) a multilayer environmental map of the to-be-operated space; wherein the multilayer environmental map comprises a plurality of two-dimensional maps, each of the plurality of two-dimensional maps corresponds to the information of obstacles detected at each respective detection layer; and
processing (200) information in the multilayer environmental map to obtain processed data;
wherein, the walking path is planed (300) according to the processed data.

3. The method according to claim 2, wherein the processing (200) includes uniting the information of obstacles in each two-dimensional map to obtain the information of one or more of the obstacles of the to-be-operated space.

4. The method according to claim 2, wherein the processing (200) includes intersecting walkable regions in each two-dimensional map to obtain walkable regions.

5. The method according to claim 2, wherein the processing (200) comprises:
uniting the information of obstacles in each two-dimensional map to obtain the information of one or more of the obstacles of the to-be-operated space; and
intersecting walkable regions in each two-dimensional map to obtain the information of walkable regions of the to-be-operated space.

6. The method according to claim 3, wherein the walkable regions include one or more of the regions in the to-be-operated space that have a distance from obstacles not less than a particular value.

7. The method according to claim 6, wherein the particular value is 10-30 centimeters.

8. The method according to claim 6, wherein planning (300) a walking path for the self-propelled robot includes selecting, in one of the walkable regions, a starting point and an endpoint for the self-propelled robot, a shortest path between the starting point and the endpoint being the walking path.

9. The method according to claim 2, wherein the multilayer map is a two-dimensional map corresponding to distribution information of the obstacles at different heights.

10. The method according to claim 9, wherein the information of obstacles at different plane heights is labeled in different ways.

11. The method according to claim 2, wherein obtaining processed data in further comprises:
determining whether a new walking path is to be added; and
if the new walking path is to be added, correspondingly updating the multilayer environmental map and then proceeding; or
if the new walking path is not to be added, proceeding without updating the multilayer environmental map.

12. The method according to claim 1, wherein the self-propelled robot walks in the to-be-operated space in such a way that the self-propelled robot scans and detects peripheral regions on site, and walks towards a next undetected region until one or more of the regions in the to-be-operated space are detected.

13. The method according to claim 1, wherein the self-propelled robot walks in the to-be-operated space in such a way that the self-propelled robot directly enters a middle position of the to-be-operated space, scans and detects peripheral regions at the middle position, and walks towards a next undetected region until one or more of the regions in the to-be-operated space are detected.

14. The method according to claim 1, wherein the self-propelled robot walks in the to-be-operated space in a way of traversal walking.

15. A self-propelled robot, comprising: sensor assemblies arranged on the self-propelled robot at different heights, a processor and a memory; wherein the sensor assemblies arranged at different heights divide the to-be-operated space into a plurality of detection layers, and record the information of obstacles detected at each respective detection layer;
wherein the sensor assemblies are coupled with the processor and configured to acquire information of obstacles at different heights when the self-propelled robot walks in a to-be-operated space;
wherein the memory is configured to store a program; and
wherein the processor is coupled with the memory and configured to execute the program stored in the memory to:
plan a walking path for the self-propelled robot according to the information of obstacles at different heights.

## Patentansprüche

1. Verfahren zur Wegplanung eines selbstfahrenden Roboters, umfassend:
Erfassen (100) von Informationen über Hindernisse in unterschiedlichen Höhen durch Sensoranordnungen, die an dem selbstfahrenden Roboter angeordnet sind, wenn der selbstfahrende Roboter in einem zu bedienenden Raum unterwegs ist; wobei die Sensoranordnungen, die in unterschiedlichen Höhen angeordnet sind, den zu bedienenden Raum in eine Vielzahl von Erfassungsschichten unterteilen und die Informationen über die Hindernisse, die in jeder jeweiligen Erfassungsschicht erfasst werden, aufzeichnen; und
Planen (300) eines Gehweges für den selbstfahrenden Roboter gemäß der Information über Hindernisse in verschiedenen Höhen.

2. Verfahren nach Anspruch 1, ferner umfassend:
Erzeugen (100) einer mehrschichtigen Umgebungskarte des zu bedienenden Raums;
wobei die mehrschichtige Umgebungskarte eine Vielzahl von zweidimensionalen Karten umfasst, wobei jede der Vielzahl von zweidimensionalen Karten der Information von Hindernissen entspricht, die in jeder jeweiligen Erfassungsschicht erfasst werden; und
Verarbeiten (200) von Informationen in der mehrschichtigen Umgebungskarte, um daraus verarbeitete Daten zu erzeugen;
wobei der Gehweg entsprechend den verarbeiteten Daten geplant wird (300).

3. Verfahren nach Anspruch 2, wobei die Verarbeitung (200) das Zusammenführen der Informationen über Hindernisse in jeder zweidimensionalen Karte umfasst, um die Informationen über eines oder mehrere der Hindernisse des zu bedienenden Raums zu ermitteln.

4. Verfahren nach Anspruch 2, wobei die Verarbeitung (200) die Überschneidung von begehbaren Bereichen in jeder zweidimensionalen Karte umfasst, um begehbare Bereiche zu ermitteln.

5. Verfahren nach Anspruch 2, wobei die Verarbeitung (200) umfasst:
Zusammenführen der Informationen über Hindernisse in jeder zweidimensionalen Karte, um die Informationen über eines oder mehrere der Hindernisse des zu bedienenden Raums zu ermitteln; und
die Überschneidung von begehbaren Bereichen in jeder zweidimensionalen Karte, um die Information über begehbare Bereiche des zu bedienenden Raums zu ermitteln.

6. Verfahren nach Anspruch 3, wobei die begehbaren Bereiche einen oder mehrere Bereiche in dem zu bedienenden Raum umfassen, die einen Abstand zu Hindernissen aufweisen, der nicht geringer ist als ein bestimmter Wert.

7. Verfahren nach Anspruch 6, wobei der bestimmte Wert 10-30 Zentimeter beträgt.

8. Verfahren nach Anspruch 6, wobei das Planen (300) eines Gehweges für den selbstfahrenden Roboter das Auswählen eines Ausgangspunktes und eines Endpunktes für den selbstfahrenden Roboter in einem der begehbaren Bereiche umfasst, wobei der kürzeste Weg zwischen dem Ausgangspunkt und dem Endpunkt der Gehweg ist.

9. Verfahren nach Anspruch 2, wobei die mehrschichtige Karte eine zweidimensionale Karte ist, die der Verteilung von Information über Hindernisse in verschiedenen Höhen entspricht.

10. Verfahren nach Anspruch 9, wobei die Informationen über Hindernisse auf verschiedenen Höhen der Schnittebene auf unterschiedliche Weise gekennzeichnet werden.

11. Verfahren nach Anspruch 2, wobei das Erhalten von verarbeiteten Daten weiterhin umfasst:
Bestimmen, ob ein neuer Gehweg hinzugefügt werden soll; und
wenn der neue Gehweg hinzugefügt werden soll, entsprechendes Aktualisieren der mehrschichtigen Umgebungskarte und dann Fortfahren; oder
wenn der neue Gehweg nicht hinzugefügt werden soll, Fortfahren ohne Aktualisieren der mehrschichtigen Umgebungskarte.

12. Verfahren nach Anspruch 1, wobei der selbstfahrende Roboter in dem zu bedienenden Raum so unterwegs ist, dass der selbstfahrende Roboter periphere Bereiche vor Ort abscannt und erfasst und zu dem nächsten nicht erfassten Bereich fährt, bis einer oder mehrere der Bereiche in dem zu bedienenden Raum erfasst werden.

13. Verfahren nach Anspruch 1, wobei der selbstfahrende Roboter in dem zu bedienenden Raum so unterwegs ist, dass er direkt in die mittlere Position des zu bedienenden Raums eintritt, periphere Bereiche an der mittleren Position abscannt und erfasst und zu dem nächsten nicht erfassten Bereich fährt, bis einer oder mehrere Bereiche in dem zu bedienenden Raum erfasst werden.

14. Verfahren nach Anspruch 1, wobei der selbstfahrende Roboter in dem zu bedienenden Raum eine Querschnittsfahrt ausführt.

15. Selbstfahrender Roboter, umfassend: Sensoranordnungen, die auf dem selbstfahrenden Roboter in unterschiedlichen Höhen angeordnet sind, einen Prozessor und einen Speicher; wobei die in unterschiedlichen Höhen angeordneten Sensoranordnungen den zu bedienenden Raum in mehrere Erfassungsschichten unterteilen und die Informationen über die in jeder jeweiligen Erfassungsschicht erfassten Hindernisse aufzeichnen;
wobei die Sensoranordnungen mit dem Prozessor gekoppelt sind und so konfiguriert sind, dass sie Informationen über Hindernisse in unterschiedlichen Höhen erfassen, wenn der selbstfahrende Roboter in einem zu bedienenden Raum unterwegs ist;
wobei der Speicher zum Speichern eines Programms konfiguriert ist; und
wobei der Prozessor mit dem Speicher gekoppelt und so konfiguriert ist, dass er das in dem Speicher gespeicherte Programm ausführt, um:
Planen eines Gehweges für den selbstfahrenden Roboter entsprechend der Information über Hindernisse in unterschiedlichen Höhen.

## Revendications

1. Le procédé de planification de trajectoire d'un robot automoteur, comprenant :
l'acquisition (100), par des ensembles de capteurs disposés sur un robot automoteur, des informations sur les obstacles à différentes hauteurs lorsque le robot automoteur se déplace dans un espace à exploiter ; dans lequel les ensembles de capteurs disposés à des hauteurs différentes divisent l'espace à exploiter en une pluralité de couches de détection et enregistrent les informations sur les obstacles détectés au niveau de chaque couche de détection respective ; et
la planification (300) d'un chemin de déplacement pour le robot automoteur en fonction des informations sur les obstacles à différentes hauteurs.

2. Le procédé selon la revendication 1, comprenant en outre :
la création (100) d'une carte multicouche d'environnement de l'espace à exploiter ;
dans laquelle la carte multicouche d'environnement comprant une pluralité de cartes bidimensionnelles, chacune des pluralités de cartes bidimensionnelles correspond aux informations sur les obstacles détectés au niveau de chaque couche de détection respective ; et
le traitement (200) des informations dans la carte multicouche d'environnement pour obtenir les données traitées ;
dans lequel le chemin de déplacement est planifié (300) en fonction des données traitées.

3. Le procédé selon la revendication 2, dans lequel le traitement (200) comprend l'unification des informations sur les obstacles dans chaque carte bidimensionnelle pour obtenir les informations d'un ou plusieurs obstacles de l'espace à exploiter.

4. Le procédé selon la revendication 2, dans lequel le traitement (200) comprend l'intersection de zones praticables dans chaque carte bidimensionnelle pour l'acquisition des zones praticables.

5. Le procédé selon la revendication 2, dans lequel le traitement (200) comprend :
l'unification des informations sur les obstacles dans chaque carte bidimensionnelle pour l'acquisition des informations sur un ou plusieurs obstacles dans l'espace à exploiter ; et
l'intersection des zones praticables dans chaque carte bidimensionnelle pour l'acquisition des informations sur les zones praticables de l'espace à exploiter.

6. Le procédé selon la revendication 3, dans lequel les zones praticables comprennent une ou plusieurs régions dans l'espace à exploiter ayant une distance des dits obstacles non inférieure à une valeur déterminée.

7. Le procédé selon la revendication 6, dans lequel la valeur déterminée est de 10 à 30 centimètres.

8. Le procédé selon la revendication 6, dans lequel la planification (300) d'un chemin de déplacement pour le robot automoteur comprend la sélection, dans l'une des zones praticables, d'un point de départ et d'un point d'arrivée pour le robot automoteur, le chemin de déplacement étant considéré comme le chemin le plus court entre le point de départ et le point d'arrivée.

9. Le procédé selon la revendication 2, dans lequel la carte multicouche est une carte bidimensionnelle correspondant à des informations de répartition des obstacles à différentes hauteurs.

10. Le procédé selon la revendication 9, dans lequel les informations sur les obstacles à différentes hauteurs de plan sont étiquetées de manières différentes.

11. Le procédé selon la revendication 2, dans lequel l'obtention de données traitées comprend en outre :
la détermination de si un nouveau chemin de déplacement doit être ajouté ; et
si le nouveau chemin de déplacement ne doit pas être ajouté, en mettant à jour respectivement la carte multicouche d'environnement puis en exécutant ; ou
si le nouveau chemin de déplacement ne doit pas être ajouté, en exécutant sans mettre à jour la carte multicouche d'environnement.

12. Le procédé selon la revendication 1, dans lequel le robot automoteur se déplace dans l'espace à exploiter de telle manière que le robot automoteur scanne et détecte les régions périphériques sur site et se dirige vers une zone suivante non détectée jusqu'à ce qu'une ou plusieurs zones dans l'espace à exploiter soient détectées.

13. Le procédé selon la revendication 1, dans lequel le robot automoteur se déplace dans l'espace à exploiter de telle manière que le robot automoteur entre directement dans une position médiane de l'espace à exploiter, scanne et détecte les régions périphériques en position médiane, et se dirige vers une zone suivante non détectée jusqu'à ce qu'une ou plusieurs zones dans l'espace à exploiter soient détectées.

14. Le procédé selon la revendication 1, dans lequel le robot automoteur se déplace dans l'espace à exploiter selon un déplacement transversal.

15. Un robot automoteur, comprenant : des ensembles de capteurs disposés sur le robot automoteur à différentes hauteurs, un processeur et une mémoire ; dans lequel les ensembles de capteurs disposés à des hauteurs différentes divisent l'espace à exploiter en une pluralité de couches de détection et enregistrent les informations sur les obstacles détectés au niveau de chaque couche de détection respective ;
dans lequel les ensembles de capteurs sont couplés au processeur et configurés pour l'acquisition des informations sur les obstacles à différentes hauteurs lorsque le robot automoteur se déplace dans un espace à exploiter ;
dans lequel la mémoire est configurée pour stocker un programme ; et
dans lequel le processeur est couplé à la mémoire et configuré pour exécuter le programme stocké dans la mémoire pour :
la planification d'un chemin de déplacement pour le robot automoteur en fonction des informations sur les obstacles à différentes hauteurs.
